# DEMANDE DE BREVET EUROPEEN

(11) **EP 3 181 928 A1**
(43) Date de publication de la demande: **21.06.2017**
(21) Numéro de dépôt: 16202023.4
(22) Date de dépôt: 02.12.2016
(51) Int. Cl.: F16C 19/46, F16C 13/00, F16C 33/46, F16C 33/56, F16C 33/66, F16C 33/78

(54) **PALIER À ROULEMENT**

(30) Priorité: 16.12.2015 FR 1562519
(71) Demandeur: NTN-SNR Roulements, 74000 Annecy (FR)
(72) Inventeur: TORNIER, Sylvain, 74600 SEYNOD (FR)
(74) Mandataire: Sayettat, Julien Christian

(57) **Abrégé**

L'invention concerne un palier à roulement comprenant une bague extérieure (10) et une bague intérieure (11) pourvues chacune d'une piste annulaire (10a, 11a) entre lesquelles est formé un espace de roulement dans lequel un anneau de corps roulants (20) est disposé pour permettre la rotation relative desdites bagues selon un axe (B), ledit espace de roulement étant pourvu d'une matrice structurelle (21) apte à assurer la lubrification dudit espace, ladite matrice présentant des ponts (22) s'étendant axialement entre les corps roulants (20) pour les retenir circonférentiellement les uns par rapport aux autres en autorisant leur rotation autour de leur axe propre, la matrice (21) présentant deux flasques annulaires (23) reliant circonférentiellement respectivement un coté des ponts (22) par leur extrémité, lesdits flasques étant montés entre les bagues (10, 11) pour garantir leur concentricité avec l'axe (B) de rotation afin de limiter le pivotement transversal alternatif des corps roulants (20) sur eux-mêmes dans l'espace de roulement.

## Description

L'invention concerne un palier à roulement comprenant une bague extérieure et une bague intérieure pourvues chacune d'une piste annulaire entre lesquelles est formé un espace de roulement, ainsi qu'un système mécanique comprenant un tel palier pour appliquer un effort radial oscillant par l'intermédiaire de la paroi périphérique de la bague extérieure.

Dans une application particulière, le système mécanique forme un double volant amortisseur pour véhicule automobile qui, de façon générale, comprend un volant d'inertie primaire destiné à être monté sur une extrémité d'un vilebrequin, notamment d'un moteur à combustion, ainsi qu'un volant d'inertie secondaire destiné à coopérer avec un disque de friction d'un embrayage et monté en rotation relative par rapport au volant primaire.

Par ailleurs, les doubles volants amortisseurs comprennent des moyens d'amortissement agencés pour transmettre un couple et amortir les acyclismes de rotation entre les volants d'inertie.

En particulier, on connaît du document FR-3 008 152 un tel double volant amortisseur, dont les moyens d'amortissement comprennent au moins une lame élastique solidaire en rotation d'un des volants d'inertie et au moins un palier monté sur l'autre volant d'inertie, ladite lame présentant une surface de came sur laquelle la paroi périphérique de la bague extérieure est disposée en roulement.

Ainsi, lors d'un débattement angulaire relatif des volants d'inertie, la paroi périphérique de la bague extérieure, en roulant sur la surface de came de la lame, exerce sur ladite lame un effort de flexion réversible, auquel ladite lame réagit en exerçant sur ledit galet une force de rappel qui tend à ramener lesdits volants d'inertie vers leur position angulaire de repos.

Une telle réalisation s'avère particulièrement avantageuse, en ce qu'elle permet de simplifier de façon importante la fabrication des doubles volants amortisseurs. En outre, elle propose une structure qui permet d'obtenir des débattements angulaires importants, ce qui permet l'utilisation de moyens d'amortissement avec une raideur restreinte, et donc une plus grande efficacité.

Compte tenu des efforts radiaux importants qui s'appliquent entre le palier et la lame élastique, on utilise classiquement des paliers comprenant un anneau d'aiguilles disposé dans l'espace de roulement. En particulier, un anneau d'aiguilles sensiblement jointives le long du cercle primitif de roulement est utilisé de façon avantageuse pour pouvoir supporter les efforts radiaux.

Toutefois, même avec de tels paliers à roulement, il demeure un problème de fiabilité du guidage en rotation dans le temps, qui est notamment dû aux sollicitations en oscillation à fréquence élevée de la bague extérieure qui, en induisant un pivotement transversal alternatif des aiguilles sur elles-mêmes, provoquent sous charge une usure prématurée des pistes de roulement, notamment par matage et/ou indentation rapide. En particulier, le pivotement transversal alternatif des aiguilles sur elles-mêmes provoque une éjection axiale du lubrifiant de l'espace de roulement, ce qui conduit à l'apparition de faux effets Brinell en fonctionnement, et donc à un risque de grippage.

Ce problème est d'autant plus critique dans le cas où, comme dans un double volant amortisseur, la lubrification peut devenir insuffisante sous l'effet d'une centrifugation du lubrifiant à l'opposé de la zone d'application de la charge des aiguilles dans l'espace de roulement.

L'invention vise à perfectionner l'art antérieur en proposant notamment un palier à roulement, en particulier pour des applications à fortes charges radiales oscillantes, dont la fiabilité dans le temps est améliorée en limitant le pivotement transversal alternatif des corps roulants sur eux-mêmes dans l'espace de roulement tout en optimisant la lubrification dudit espace.

A cet effet, selon un premier aspect, l'invention propose un palier à roulement comprenant une bague extérieure et une bague intérieure pourvues chacune d'une piste annulaire entre lesquelles est formé un espace de roulement dans lequel un anneau de corps roulants est disposé pour permettre la rotation relative desdites bagues selon un axe, ledit espace de roulement étant pourvu d'une matrice structurelle apte à assurer la lubrification dudit espace, ladite matrice présentant des ponts s'étendant axialement entre les corps roulants pour les retenir circonférentiellement les uns par rapport aux autres en autorisant leur rotation autour de leur axe propre, la matrice présentant deux flasques annulaires reliant circonférentiellement respectivement un coté des ponts par leur extrémité, lesdits flasques étant montés entre les bagues pour garantir leur concentricité avec l'axe de rotation afin de limiter le pivotement transversal alternatif des corps roulants sur eux-mêmes dans l'espace de roulement.

Selon un deuxième aspect, l'invention propose un système mécanique comprenant au moins un tel palier à roulement et un organe sur lequel la paroi périphérique de la bague extérieure dudit palier est destinée à appliquer un effort radial en oscillant relativement à la bague intérieure.

D'autres particularités et avantages de l'invention apparaîtront dans la description qui suit, faite en référence aux figures annexées, dans lesquelles :
- la figure 1 représente en perspective partiellement éclatée et coupée un double volant amortisseur selon un mode de réalisation de l'invention ;
- la figure 2 est une vue éclatée d'un palier à roulement selon un mode de réalisation de l'invention ;
- la figure 3 est une vue en coupe longitudinale du palier de la figure 2 ;
- la figure 4 représente en perspective partiellement coupée et écorchée l'anneau d'aiguilles et la matrice structurelle du palier de la figure 2, la figure 4a étant une vue agrandie de la zone A de la figure 4.

En relation avec ces figures, on décrit ci-dessous un système mécanique et un palier à roulement qui est notamment destiné à pouvoir appliquer un effort radial oscillant sur un organe dudit système mécanique.

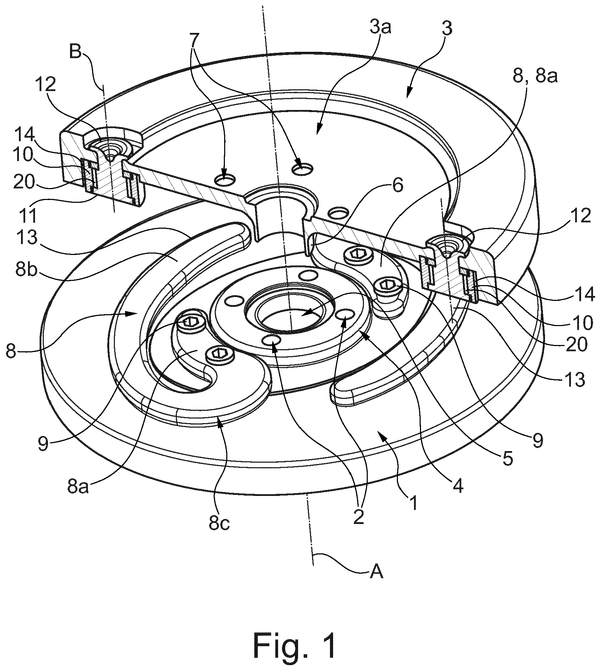

Dans l'application illustrée sur la figure 1, le système mécanique forme un double volant amortisseur pour véhicule automobile comprenant un volant d'inertie primaire 1 destiné à être monté sur une extrémité d'un vilebrequin, notamment d'un moteur à combustion interne (non représenté). Pour ce faire, le volant primaire 1 est pourvu d'orifices 2 agencés pour la fixation, par exemple par vissage, dudit volant primaire sur le vilebrequin.

Le double volant amortisseur comprend en outre un volant d'inertie secondaire 3 dont la face externe 3a, c'est-à-dire la face destinée à être opposée au vilebrequin, est agencée pour coopérer avec un disque de friction d'un embrayage (non représenté).

Le volant secondaire 3 est monté en rotation relative par rapport au volant primaire 1, par exemple au moyen d'un palier à roulement, et ce autour d'un axe A qui est aligné avec les axes de révolution respectifs desdits volants.

Pour ce faire, le volant primaire 1 comprend un moyeu central 4 qui présente un alésage 5 dans lequel la bague extérieure du palier à roulement est montée. De même, le volant secondaire 3 comprend un fût central 6 sur lequel la bague intérieure du palier à roulement est destinée à être montée.

Dans le mode de réalisation représenté sur la figure 1, les orifices 2 de fixation du volant primaire 1 sont répartis angulairement autour du moyeu central 4. De même, le volant secondaire 3 comprend des orifices 7 qui sont répartis angulairement autour du fût central 6 en étant disposés en regard axial de respectivement un orifice 2 du volant primaire 1, afin de permettre le passage des vis par chacun des orifices 2, 7 lors du montage du double volant amortisseur sur le vilebrequin.

Le double volant amortisseur comprend en outre des moyens d'amortissement agencés pour transmettre un couple et amortir les acyclismes de rotation entre les volants d'inertie 1, 3. En relation avec la figure 1, les moyens d'amortissement comprennent deux lames élastiques 8 qui sont solidaires en rotation du volant primaire 1 en étant disposées symétriquement par rapport à l'axe A de rotation relative des volants 1, 3. En particulier, les lames 8 comprennent chacune une première extrémité 8a qui est fixée par des écrous 9 au volant primaire 1.

Les moyens d'amortissement comprennent en outre deux galets qui sont montés en rotation sur le volant secondaire 3, notamment suivant un axe B qui est parallèle à l'axe A de rotation relative des volants 1, 3, et en étant disposés symétriquement par rapport à l'axe A.

En relation avec la figure 1, chaque galet est formé par la bague extérieure 10 d'un palier à roulement comprenant une bague intérieure 11 qui est monté sur le volant secondaire 3. Dans cette description, les termes de positionnement dans l'espace sont pris en référence à l'axe de rotation B du palier. En particulier, le terme « intérieur » est relatif à une disposition proche de cet axe, le terme « extérieur » est relatif à une disposition à distance de cet axe, le terme « axial » est relatif à une direction suivant cet axe et le terme « radial » à une direction perpendiculaire à cet axe.

La bague intérieure 11 comprend une collerette 12 qui s'étend radialement et qui est agencée pour fixer ladite bague dans un orifice formé sur la périphérie du volant secondaire 3, ladite collerette pouvant notamment être réalisée par sertissage orbital ou bouterollage. Par ailleurs, les bagues 10, 11 sont pourvues chacune d'une piste annulaire 10a, 11a entre lesquelles est formé un espace de roulement dans lequel un anneau de corps roulants 20 est disposé pour permettre la rotation relative desdites bagues selon l'axe B.

En relation avec les figures, on décrit ci-dessous un mode de réalisation dans lequel les corps roulants sont des aiguilles 20. Plus particulièrement, un anneau d'aiguilles 20 sensiblement jointives le long du cercle primitif de roulement est utilisé de façon avantageuse pour pouvoir supporter des efforts notamment radiaux importants. En variante, des corps roulants 20 cylindriques, par exemple sous la forme de rouleaux, ou coniques peuvent être utilisés.

Pour assurer la fonction d'amortissement, chaque lame 8 présente une surface de came 13 qui est formée sur son extrémité libre 8b, et sur laquelle une paroi périphérique 14 de respectivement une bague extérieure 10 est disposée en roulement.

En particulier, la surface de came 13 est agencée pour que, lors d'un débattement angulaire relatif entre le volant primaire 1 et le volant secondaire 3, la bague extérieure 10 se déplace par roulement de sa paroi périphérique 14 sur ladite surface de came, et exerce ainsi un effort de flexion de la lame 8 en fonction dudit débattement angulaire. Par ailleurs, du fait de son élasticité, la lame 8 exerce sur la bague extérieure 10 une force de rappel qui tend à ramener les volants primaire 1 et secondaire 3 vers leur position angulaire relative de repos.

Ainsi, les lames élastiques 8 sont aptes à transmettre un couple entraînant du volant primaire 1 vers le volant secondaire 3 (sens direct) et un couple résistant du volant secondaire 3 vers le volant primaire 1 (sens rétro).

En relation avec la figure 1, chaque lame élastique 8 comprend une portion courbe 8c qui relie sa première extrémité 8a et son extrémité libre 8b portant la surface de came 13, et qui s'étend de manière sensiblement circonférentielle. En particulier, le rayon de courbure et la longueur de la portion courbe 8c peuvent être déterminés en fonction de la raideur souhaitée pour la lame élastique 8. Par ailleurs, les lames élastiques 8 peuvent être réalisées en une seule pièce ou être constituées de plusieurs lamelles superposées.

Lors du fonctionnement du double volant amortisseur, un effort radial important, notamment jusqu'à 3 tonnes, s'applique entre la paroi périphérique 14 de la bague extérieure 10 et la lame élastique 8 en pouvant provoquer une oscillation de ladite bague extérieure relativement à la bague intérieure 11. En particulier, on observe des oscillations de fréquence de l'ordre de 30 Hz et d'amplitude de l'ordre de +/- 4 mm qui s'avèrent telles que les aiguilles 20 dans l'espace de roulement sont susceptibles d'effectuer moins d'un tour autour de leur axe propre, notamment dix fois moins que ledit tour.

Il en résulte que les aiguilles 20 ont tendance à pivoter transversalement de façon alternative dans l'espace de roulement ce qui provoque sous charge une usure prématurée des pistes de roulement 10a, 11 a, notamment par matage et/ou indentation rapide. En particulier, le pivotement transversal alternatif des aiguilles 20 sur elles-mêmes provoque une éjection axiale du lubrifiant de l'espace de roulement, ce qui conduit à l'apparition de faux effets Brinell en fonctionnement, et donc un risque de grippage.

Par ailleurs, le palier à roulement étant monté sur le volant d'inertie 3 avec l'axe B d'oscillation de la bague extérieure 10 qui est décalé de l'axe A de rotation dudit volant, il en résulte une centrifugation du lubrifiant à l'opposé de la zone d'application de la charge des aiguilles 20 dans l'espace de roulement, et ce d'autant plus que la paroi périphérique 14 est en appui intérieur sur la surface de came 13.

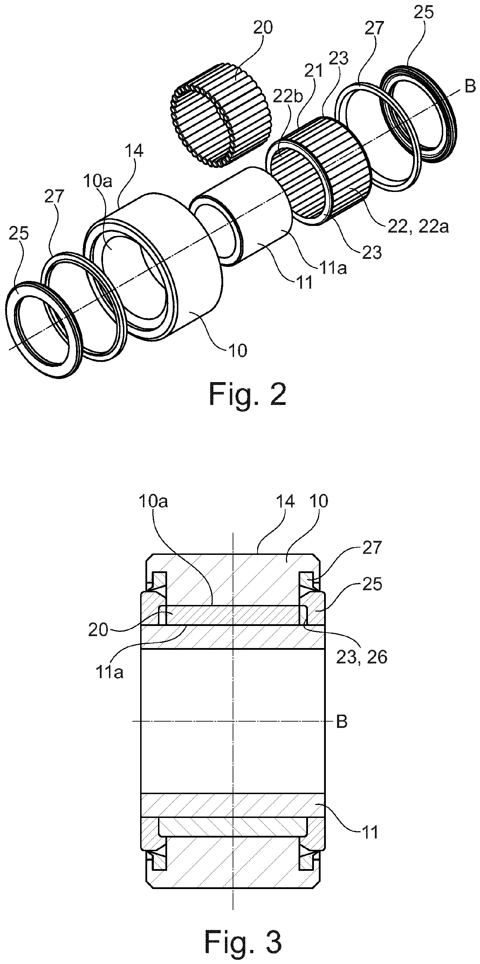

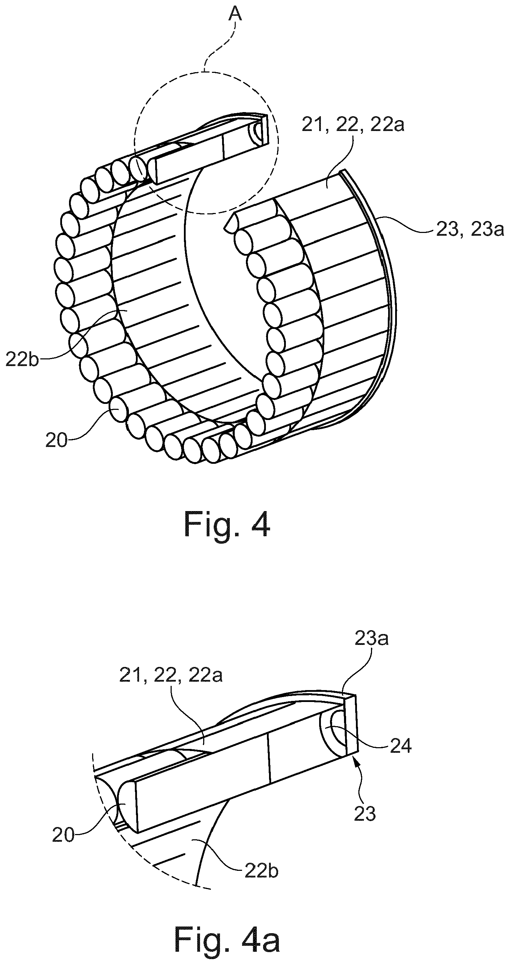

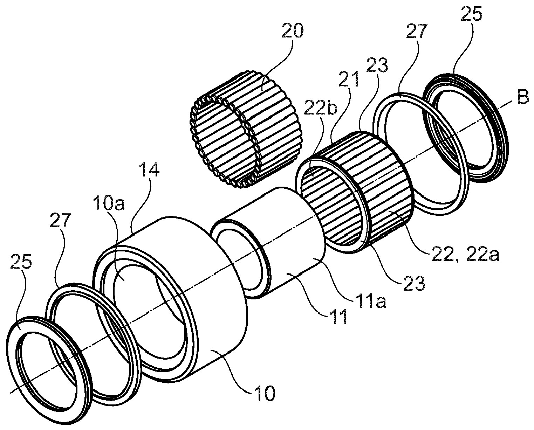

En relation avec les figures 2 à 4, on décrit ci-dessous un palier à roulement, notamment utilisable pour appliquer un effort radial oscillant sur la lame 8 d'un double volant amortisseur selon la figure 1, qui permet de résoudre ces problèmes d'usure prématurée et de défaut de lubrification de l'espace de roulement, et donc de fiabiliser dans le temps la fonction d'amortissement conférée.

L'espace de roulement est pourvu d'une matrice structurelle 21 qui est apte à assurer la lubrification dudit espace, ladite matrice présentant des ponts 22 s'étendant axialement entre les aiguilles 20 pour les retenir circonférentiellement les unes par rapport aux autres en autorisant leur rotation autour de leur axe propre.

Dans le mode de réalisation représenté, la matrice 21 présente des ponts extérieurs 22a - respectivement intérieurs 22b - qui s'étendent radialement entre les cercles de contact extérieur - respectivement intérieur - et primitif des aiguilles 20. En particulier, les ponts extérieurs 22a et intérieurs 22b sont séparés radialement par le cercle de contact primitif des aiguilles 20 sensiblement jointifs, lesdites aiguilles étant saillantes desdits ponts pour être en contact sur les pistes de roulement 10a, 11 a suivant leurs cercles de contact respectifs.

En particulier, le caractère structurel de la matrice 21 est suffisant pour maintenir le positionnement en anneau des aiguilles 20 lors de la rotation du palier, au moins une partie de la périphérie desdites aiguilles étant en contact sur les ponts 22 pour assurer une lubrification au plus près desdites aiguilles.

Selon une réalisation, la matrice structurelle 21 est formée d'un matériau thermoplastique dans lequel est retenu un lubrifiant. Pour ce faire, la matrice 21 peut être formée à partir d'une composition qui est introduite autour de l'anneau d'aiguilles 20 préalablement disposé dans l'espace de roulement, ladite composition enrobant lesdites aiguilles étant ensuite chauffée afin de la solidifier. Selon une réalisation, la composition comprend un mélange d'une poudre d'un matériau thermoplastique avec une huile et/ou avec une graisse.

Ainsi, par chauffage, la poudre de matériau va fusionner pour créer une matrice 21 dans laquelle le lubrifiant est piégé. Le matériau va alors se comporter comme une éponge à l'intérieur de laquelle le lubrifiant est lié par des forces de type Van der Walls. Ensuite, au fur et à mesure de l'utilisation du palier, les liaisons retenant le lubrifiant au matériau vont être érodées ce qui aura pour effet de libérer ledit lubrifiant.

Le choix du lubrifiant est principalement dicté par les contraintes de l'application envisagée. Des huiles minérales, synthétiques ester ou perfluorées peuvent être classiquement utilisées, ainsi que des graisses à savon métallique et huile minérale, synthétique ester, perfluorée ou un mélange d'huiles minérales et perfluorées (graisses dites hybrides).

Concernant le choix du matériau thermoplastique, il est principalement dicté par le lubrifiant et les besoins de l'application, devant à la fois être compatible chimiquement avec le lubrifiant et permettre la formation d'une matrice 21 répondant aux exigences de cinétique de relargage du lubrifiant nécessaires à l'application.

En particulier, il peut être choisi dans le groupe des polymères comprenant les polyéthylènes à haute densité. Dans le cas d'une application haute température, typiquement à une température supérieure à 110-120°C et notamment de l'ordre de 150°C, le polymère peut être choisi dans le groupe des polymères à haut point de fusion comprenant les polypropylènes, les polyamides, les polyfluorures de vinylidène.

La matrice 21 présente deux flasques annulaires 23 reliant circonférentiellement respectivement un coté des ponts 22 par leur extrémité. De façon avantageuse, les flasques 23 sont formés d'une pièce avec les ponts 22, lors de l'opération sus-décrite de chauffage de la composition dans l'espace de roulement.

Les flasques 23 sont montés entre les bagues 10, 11 pour garantir leur concentricité avec l'axe B de rotation afin de limiter le pivotement transversal alternatif des aiguilles 20 sur elles-mêmes dans l'espace de roulement. En effet, la concentricité permet de garantir un alignement axial des ponts 22 et donc un maintien axial des aiguilles 20 entre lesdits ponts.

De façon avantageuse, le positionnement axial des aiguilles 20 est amélioré en prévoyant que le flasque 23 présente des logements 24 dans lesquels l'extrémité de respectivement une aiguille 20 est maintenue circonférentiellement. En particulier, les ponts 22 s'étendent entre les flasques 23 et les extrémités des aiguilles 20 sont alors enrobées par les flasques 23 pour former les logements 24 après chauffage.

Selon la réalisation représentée, les flasques 23 s'étendent radialement en présentant une couronne extérieure 23a saillant radialement vers l'extérieur de la dimension radiale des ponts extérieurs 22a. En variante, une couronne saillant intérieurement peut être prévue sur le flasque 23.

Les flasques 23 représentés sont retenus axialement et radialement dans l'espace de roulement pour garantir en fonctionnement, notamment en oscillation de faible amplitude et à haute fréquence, leur concentricité avec l'axe B de rotation du palier.

Pour ce faire, au moins une bague 10, 11 peut présenter un embrèvement dans lequel la périphérie d'un flasque 23 est retenu. En particulier, deux embrèvements peuvent être formés en regard radial sur respectivement une bague 10, 11, des couronnes extérieure 23a et intérieure étant disposées sans jeu dans respectivement un desdits embrèvements pour assurer la retenue du flasque 23.

En relation avec les figures, le palier comprend une rondelle 25, notamment en acier trempé, équipant un côté de l'espace de roulement, ladite rondelle étant associée à une bague 10, 11 en formant butée de retenue axiale et/ou radiale d'un flasque 23. En particulier, chaque côté de l'espace de roulement est équipé d'une rondelle 25 dont la périphérie intérieure est montée frettée autour d'une portée extérieure de la bague intérieure 11.

Plus précisément, la rondelle 25 présente une portée radiale qui est entourée par une portée axiale en formant un logement 26 dans lequel le flasque 23 est retenu, notamment en prévoyant que ledit flasque remplisse le logement 26 pour y être disposé sans jeu. En particulier, les rondelles 25 forment alors également butée latérale empêchant tout déplacement axial des aiguilles 20 dans l'espace de roulement.

En outre, la réalisation représentée prévoit un anneau d'étanchéité 27 monté dans un embrèvement de la bague extérieure 10 pour être en contact frottant sur la rondelle 25 afin d'assurer une fonction d'étanchéité du côté correspondant de l'espace de roulement.

## Revendications

1. Palier à roulement comprenant une bague extérieure (10) et une bague intérieure (11) pourvues chacune d'une piste annulaire (10a, 11 a) entre lesquelles est formé un espace de roulement dans lequel un anneau de corps roulants (20) est disposé pour permettre la rotation relative desdites bagues selon un axe (B), ledit espace de roulement étant pourvu d'une matrice structurelle (21) apte à assurer la lubrification dudit espace, ladite matrice présentant des ponts (22) s'étendant axialement entre les corps roulants (20) pour les retenir circonférentiellement les uns par rapport aux autres en autorisant leur rotation autour de leur axe propre, ledit palier étant **caractérisé en ce que** la matrice (21) présente deux flasques annulaires (23) reliant circonférentiellement respectivement un coté des ponts (22) par leur extrémité, lesdits flasques étant montés entre les bagues (10, 11) pour garantir leur concentricité avec l'axe (B) de rotation afin de limiter le pivotement transversal alternatif des corps roulants (20) sur eux-mêmes dans l'espace de roulement.

2. Palier à roulement selon la revendication 1, **caractérisé en ce qu'**au moins un flasque (23) présente des logements (24) dans lesquels l'extrémité de respectivement un corps roulants (20) est maintenue circonférentiellement.

3. Palier à roulement selon l'un des revendications 1 ou 2, **caractérisé en ce que** les flasques (23) sont retenus axialement et radialement dans l'espace de roulement.

4. Palier à roulement selon la revendication 3, **caractérisé en ce qu'**il comprend une rondelle (25) équipant un coté de l'espace de roulement, ladite rondelle étant associée à une bague (10, 11) en formant butée de retenue axiale et/ou radiale d'un flasque (23).

5. Palier à roulement selon la revendication 4, **caractérisé en ce que** la rondelle (25) présente une portée radiale entourée par une portée axiale en formant un logement (26) dans lequel le flasque (23) est retenu.

6. Palier à roulement selon l'une quelconque des revendications 3 à 5, **caractérisé en ce qu'**au moins une bague (10, 11) présente un embrèvement dans lequel la périphérie d'un flasque (23) est retenu.

7. Palier à roulement selon l'une quelconque des revendications 1 à 6, **caractérisé en ce que** la matrice (21) présente des ponts extérieurs (22a) - respectivement intérieurs (22b) - qui s'étendent radialement entre les cercles de contact extérieur - respectivement intérieur - et primitif des corps roulants (20).

8. Palier à roulement selon l'une quelconque des revendications 1 à 7, **caractérisé en ce que** les corps roulants (20) sont sensiblement jointifs le long du cercle primitif.

9. Palier à roulement selon l'une quelconque des revendications 1 à 8, **caractérisé en ce que** la matrice structurelle (21) est formée d'un matériau thermoplastique dans lequel est retenu un lubrifiant.

10. Palier à roulement selon l'une quelconque des revendications 1 à 9, **caractérisé en ce que** les corps roulants sont des aiguilles (20).

11. Système mécanique comprenant au moins un palier à roulement selon l'une quelconque des revendications 1 à 10 et un organe sur lequel la paroi périphérique (14) de la bague extérieure (10) dudit palier est destinée à appliquer un effort radial en oscillant relativement à la bague intérieure (11).

12. Système mécanique selon la revendication 11, **caractérisé en ce que** l'oscillation de la bague extérieure (10) est telle que les corps roulants (20) dans l'espace de roulement sont susceptibles d'effectuer moins d'un tour autour de leur axe propre.

13. Système mécanique selon l'une des revendications 11 ou 12, **caractérisé en ce qu'**il comprend un volant d'inertie (3) déplacé en rotation selon un axe (A), le palier étant monté sur ledit volant avec l'axe (B) d'oscillation de la bague extérieure (10) qui est décalé de l'axe (A) de rotation dudit volant.

14. Système mécanique selon la revendication 13 formant un double volant amortisseur pour véhicule automobile, comprenant un volant d'inertie primaire (1) destiné à être monté sur une extrémité d'un vilebrequin, un volant d'inertie secondaire (3) qui est monté en rotation relative par rapport audit volant d'inertie primaire, ainsi que des moyens d'amortissement agencés pour transmettre un couple et amortir les acyclismes de rotation entre lesdits volants d'inertie, lesdits moyens d'amortissement comprenant au moins une lame élastique (8) solidaire en rotation d'un volant d'inertie (1, 3), la bague extérieure (10) étant montée mobile en rotation sur l'autre volant d'inertie (1, 3), ladite lame présentant une surface de came (13) sur laquelle la paroi périphérique (14) de la bague extérieure (10) est disposée en roulement afin d'y exercer un effort de flexion réversible de ladite lame en fonction des débattements angulaires relatifs desdits volants.

15. Système mécanique selon la revendication 14, **caractérisé en ce que** les moyens d'amortissement comprennent deux lames élastiques (8) disposées symétriquement par rapport à l'axe (A) de rotation relative des volants (1, 3), ainsi que deux bagues extérieures (10) de respectivement un palier dont les parois périphériques (14) sont disposées en roulement sur respectivement une desdites lames.
